Europäisches Patentamt

European Patent Office

Office européen des brevets

(11) Publication number: **0 210 810**

**A2**

(12) # EUROPEAN PATENT APPLICATION

(21) Application number: 86305578.6

(51) Int. Cl.⁴: **F16C 25/08**

(22) Date of filing: 21.07.86

(30) Priority: 25.07.85 US 758733

(43) Date of publication of application:
04.02.87 Bulletin 87/06

(84) Designated Contracting States:
DE FR GB IT

(71) Applicant: FARREL CORPORATION
25 Main Street
Ansonia Connecticut 06401(US)

(72) Inventor: Swasey, Archie N.
228 Governor's Hill Road Oxford
CT 06483(US)
Inventor: Winter, William J.
11 Scott Lane Trumbull
CT 06611(US)

(74) Representative: Gordon, Michael Vincent et al
GILL JENNINGS & EVERY 53-64 Chancery
Lane
London WC2A 1HN(GB)

(54) **Automatically adjustable roller bearing assembly.**

(57) An automatically adjustable roller bearing assembly 3 includes two sets of tapered rollers 9 between a dual track oppositely tapered inner race 5 and a pair of single track tapered outer races 7. Each outer race 7 is in communication with a co-axial, hydraulically loaded annular ring 11 which is axially movable in an annular piston cylinder 15 supplied with hydraulic fluid. The hydraulic pressure of the fluid is maintained through an accumulator 18 at a preselectable constant pressure to permit the outer races 7 to translate axially, against the annular rings 11, as the inner race 5 expands radially due to thermal expansion. Upon thermal contraction, the hydraulic pressure forces the annular rings 11 in the opposite directions to reduce the clearances which would otherwise have been created. The assembly 3 is also useful in compensating for wear.

Fig. 1

## AUTOMATICALLY ADJUSTABLE ROLLER BEARING ASSEMBLY

This invention relates generally to anti-friction roller bearings, and more specifically to a roller bearing assembly which is automatically adjustable, in use, to compensate for internal clearance changes due to thermal variations and wear.

In machinery involving rotating elements, their rotating shafts are often supported by anti-friction roller bearings. A common configuration is for an inner bearing race to be press-fitted or otherwise secured to a rotating shaft. This inner shaft race cooperates with a larger diameter outer bearing race, which circumscribes the inner. The two races sandwich roller bearing elements, such as bearing balls, or tapered bearing elements, between each other.

Duing normal operation of a machine, the machine heats up with the result that the elements of the machine expand and clearances between parts constrict. It is necessary to design the machine such that it does not bind at elevated operating temperatures as a result of this expansion. Therefore, at lower start-up temperatures, the clearances between the elements of the roller bearing would be greater than at elevated operating temperatures. Thus, the rotating shaft is not constrained to the optimum degree, and may cause excessive runout during the machine start-up. Consequently, the dimensions of a material being processed by the machine may suffer greatly by the bearing clearance deviation, resulting in the end product being off-specification. Thus, product manufactured during the start-up and cool-down phases of the machine is wasted.

An additional general problem encountered is that as the elements of the roller bearing wear, a widening of clearances occurs, thus also falling outside acceptable tolerances for the end product.

In order to overcome this problem in the past, shims have been added to the machine set-up to set the clearance for each maximum operating temperature. Setting the shims wastes time and requires the expertise of an engineer to calculate the shim thickness required for each temperature range.

Another method has been used for adjusting the clearance between the inner and the outer bearing races. This method does not, however, provide for automatic adjustment of the race-to-race clearance during thermal expansion of the roller bearing during operation. In this method, a standard dual track internal collar is used in conjunction with a pair of sets of tapered rollers. The outer race is a specially formed dual track race, having an annular projection extending from one end. This annular projection forms a circumferential guide surface for a hydraulically actuated annular piston. The piston moves inside the projection. The piston pushes against the end faces of one set of the rollers on the end which faces away from the other set of the rollers. Before the machine is started up, the piston pushes the tapered rollers to a predetermined location. Because the rollers and both the inner and outer races are tapered, moving the rollers axially along the races changes the radial gap separation between the inner and outer races. This method establishes a precise pre-operation adjustment, but it does not provide for automatic adjustment to thermal expansion. Further, because the annular piston rubs against the moving rollers, it is likely that significant wear of the piston and the rollers would occur.

An aim of the present invention has been to provide an automatically adjustable roller bearing assembly that is inexpensive to make, uses predominantly standard parts and does not undergo an unacceptable degree of wear.

In accordance with the present invention, a roller bearing assembly comprises:-

dual track tapered inner and outer bearing races; a pair of sets of roller elements, each of said sets being captured between respective ones of said inner and outer tracks; and axially traversable means for setting a predetermined clearance between said inner and outer bearing races;

characterised in that said outer bearing race is a split pair of outer bearing races which are formed with respective single tracks and are supported against axial movement one toward the other solely by said roller elements; and said axially traversable means is for applying and maintaining a preselectable force applied axially to at least one outer race of said pair of outer races in the direction toward the other of said outer races;

whereby the roller bearing assembly is automatically adjustable, in use, to compensate for clearance changes due to thermal variations and wear.

Preferably, said axially traversable means applies the preselectable force axially to each of said pair of outer races.

Preferably, said axially traversable means includes at least one ring, which is coaxial with said at least one outer race and is axially adjacent said outer race, of a radial thickness and radius such that said ring and said outer race are contiguous across a portion of the radial thickness of each; wall structure adjacent said outer race forming an annular channel, coaxial with said ring, in which said ring is located in fluid sealing engagement; and hydraulic means, for maintaining the preselectable force prior to and during the operation of said roller bearing assembly, including an adjustable fluid pressure source and an accumulator in fluid communication with said annular channel; wherein said hydraulic means is capable of producing a constant pressure in said annular channel, which constant pressure acts through said fluid upon said ring.

Preferably, said roller elements are each of tapered cylindrical configuration.

In a particularly perferred embodiment of the present invention, therefore, there is an inner dual track oppositely tapered race, two sets of tapered rollers arranged with the narrow ends of the tapers facing away from each other, and a pair of single track outer races which capture the rollers in cooperation with the inner race. A pair of rings are arranged coaxially with the outer races, and adjacent the ends of the outer races that face away from each other. The rings and the outer races are contiguous across a portion of their radii. The rings press upon the outer races around the entire circumference of each. Each of the rings is located in an annular channel, and a respective hydraulic chamber communicates with each ring on the side of the ring facing away from the adjacent outer race. Thus, the rings are annular pistons and the annular channels are annular hydraulic cylinders. A pressure regulated source communicates with the hydraulic chamber through an accumulator of either the mechanical or air pressure type.

At start-up, the hydraulic cylinders are pressurized so that the rings are forced into contact with the outer races. As the roller bearing assembly heats up, the outer races are forced radially outward. In a device according to the prior art, forcing the outer races apart would cause them to bind against an outer housing. In the present embodiment, however, the annular rings are restrained by a constant pressure source regulated by the accumulator, rather than being restrained by fixed solid elements. Instead of binding the outer races, the annular rings recede, to a degree to permit the inner race to expand, but also maintaining enough force on the outer races so that they solidly locate the roller bearing assembly on the shaft. With continued heating, the annular rings move further and further out, always maintaining the appropriate contact with the outer races. Similarly, as the roller bearing assembly cools down, the pressurized fluid returns the annular rings and the outer races to their original starting positions.

It is readily seen that, due to the pressurized pre-loading, the present invention also automatically adjusts to compensate for widening of clearances due to wear.

A roller bearing assembly, in accordance with the present invention, will now be described, by way of example only, with reference to the accompanying drawings, in which:-

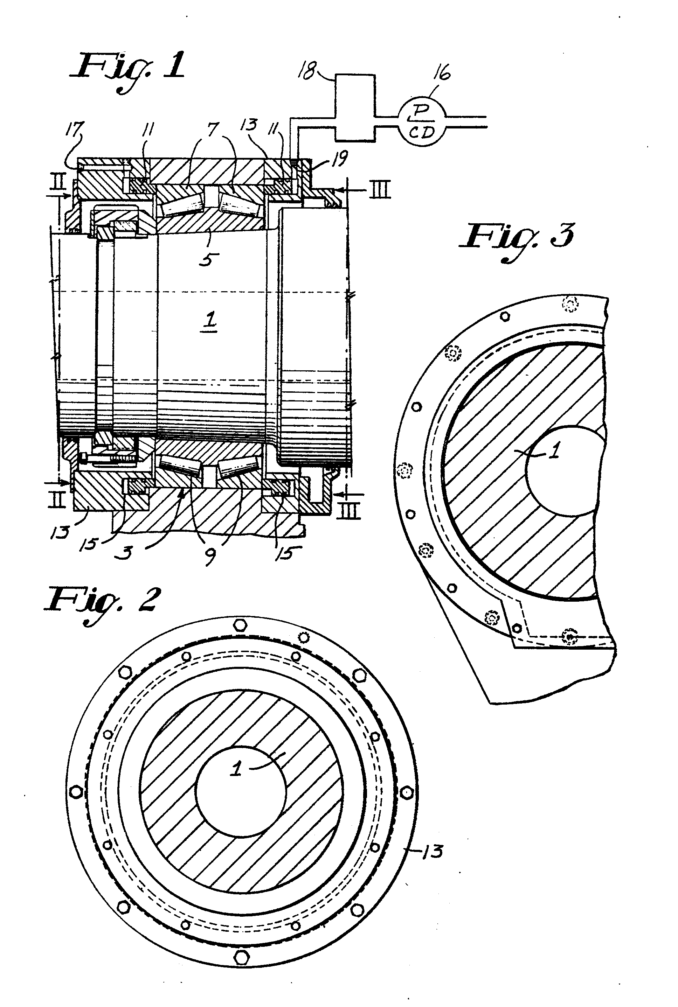

Figure 1 shows a view in partial cross-section of one embodiment of the present invention;

Figure 2 is a cross-section of the embodiment shown in Figure 1, through the line II-II; and

Figure 3 is another cross-section of the embodiment shown in Figure 1, through the line III-III.

As shown in the accompanying drawings, a shaft 1 is journalled in a tapered roller bearing assembly 3.

The roller bearing assembly 3 is made up of a dual track oppositely tapered unitary inner race 5, a split pair of standard single track outer races 7 and two sets of standard tapered cylindrical rollers 9, each set being sandwiched between respective ones of the inner and outer tracks. The two outer races 7 are supported against axial movement one toward the other solely by the rollers 9 and are hydraulically pre-loaded by two hydraulically pressurized rings 11. The rings 11 are coaxial with the outer races 7, and each is of a radial thickness and radius such that said ring 11 and said adjacent outer race 7 are contiguous across a portion of the radial thickness of each. The rings 11 are retained in ring retainers 13 each provided with an annular channel 15 formed in the retainer wall structure and in which the rings 11 travel in fluid sealing engagement. The channels 15 communicate with an optionally adjustable hydraulic pressure source 16 - (shown schematically) through pressure ports 17 and 19. The pressure source 16 maintains a preselectable constant pressure in the annular channels 15 by means of an accumulator 18 (also shown schematically).

Before start-up, pressure is applied to the pressure ports 17 and 19, urging the rings 11 into contact with the outer split races (cups) 7. As the roll journal heats up, the inner race 5 expands radially due to thermal expansion. The expansion causes the rollers 9 to be pushed against the outer races 7. Because both the rollers 9 and the outer races 7 are tapered, a component of the force transmitted from the rollers to the outer races is expressed as a motion of the outer races in the axial direction, with respect to the shaft 1. The races are able to move in the axial direction, because the rings 11 impinge upon the races 7, but only with a force corresponding to the preselectable pressure. This pressure may be set and maintained so that, under normal operating conditions, the force applied by the outer races 7 to the rings 11 due to the thermal expansion is greater then the opposed force due to the hydraulic pressure. Consequently, as the thermal expansion forces the outer races axially outward, the outer races force the rings 11 axially outward in the annular recesses 15.

The accumulator 18 may be easily selected by one skilled in the art. Both mechanical and pneumatic types are suitable. The accumulator 18 maintains the constant pressure by accommodating the small displacement caused by the motion of the annular rings 11. This motion would not be accommodated by incompressible hydraulic fluid.

When the roll journal cools, the reverse action occurs, with the pressurized source 16 pushing the rings 11 against the outer races 7 and pushing the outer races 7 closer together, to reduce the clearance that normally arises as the roller bearing assembly 3 is cooled, and the shaft diameter decreases with thermal contraction.

The present assembly also automatically accommodates widening of clearances due to wear. Prior to operation, actuation of the pressure source 16 urges the rings 11 axially toward each other. Due to the taper of the rollers 9 and the races 7, this snugs up the races in the radial direction. This feature will promote more even wear, further enhancing the life of the roller bearing assembly 3.

The normal operating pressure for this assembly would range from 50 to 500 psi (3.52 to 35.2kg/sq.cm) depending on size and loading on the roller bearing assembly 3.

Thus, it can be seen that the above-described assembly is wholly automatic. Once the proper pressure is chosen, and maintained throughout, the assembly can accommodate a wide range of temperature variation. It can also accommodate and minimize the effect of wear. Further, with the exception of the annular rings 11, and pressure delivery components, the entire roller bearing assembly 3 is made of standard parts. This greatly reduces the cost, and thereby enhances the attractiveness of the present invention.

**Claims**

1. A roller bearing assembly (3) comprises:-

dual track tapered inner (5) and outer (7) bearing races; a pair of sets of roller elements (9), each of said sets being captured between respective ones of said inner and outer tracks; and axially traversable means (11) for setting a predetermined clearance between said inner (5) and outer (7) bearing races;

characterised in that said outer bearing race is a split pair of outer bearing races (7) which are formed with respective single tracks and are supported against axial movement one toward the other solely by said roller elements (9); and said axially traversable means (11) is for applying and maintaining a preselectable force applied axially or at least one outer race of said pair of outer races - (7) in the direction toward the other of said outer races;

whereby the roller bearing assembly is automatically adjustable, in use, to compensate for clearance changes due to thermal variations and wear.

2. A roller bearing assembly according to claim 1, characterised in that said axially traversable means (11) applies the preselectable force axially to each of said pair of outer races (7).

3. A roller bearing assembly according to claim 1 or claim 2, characterised in that said axially traversable means includes at least one ring (11), which is coaxial with said at least one outer race - (7) and is axially adjacent said outer race, of a radial thickness and radius such that said ring and said outer race are contiguous across a portion of the radial thickness of each; wall structure (13) adjacent said outer race forming an annular channel (15), coaxial with said ring (11), in which said ring is located in fluid sealing engagement; and hydraulic means, for maintaining the preselectable force prior to and during the operation of said roller bearing assembly, including an adjustable fluid pressure source (16) and an accumulator (18) in fluid communication with said annular channel (15); wherein said hydraulic means is capable of producing a constant pressure in said annular channel - (15), which constant pressure acts through said fluid upon said ring (11).

4. A roller bearing assembly according to any preceding claim, characterised in that said roller elements (9) are each of tapered cylindrical configuration.

0 210 810

*Fig. 1*

*Fig. 3*

*Fig. 2*